Europäisches Patentamt

(19) European Patent Office

Office européen des brevets

(11) Publication number: **0 282 169 B1**

(12) # EUROPEAN PATENT SPECIFICATION

(45) Date of publication of patent specification:
17.04.91 Bulletin 91/16

(21) Application number: **88301185.0**

(22) Date of filing: **12.02.88**

(51) Int. Cl.⁵: **F16D 25/00**

(54) **Clutch assembly with a pressure-balance chamber.**

(30) Priority: **09.03.87 US 23540**

(43) Date of publication of application:
**14.09.88 Bulletin 88/37**

(45) Publication of the grant of the patent:
**17.04.91 Bulletin 91/16**

(84) Designated Contracting States:
**DE FR GB IT**

(56) References cited:
FR-A- 2 028 078
GB-A- 2 191 252
US-A- 2 170 538
US-A- 3 581 858
US-A- 4 070 927

(73) Proprietor: **GENERAL MOTORS CORPORATION**
**General Motors Building 3044 West Grand Boulevard**
**Detroit Michigan 48202 (US)**

(72) Inventor: **Fuehrer, Reece R.**
**51 North Road 200 E**
**Danville Indiana 46122 (US)**
Inventor: **Klemen, Donald**
**13137, Cheval Court**
**Carmel Indiana 46032 (US)**
Inventor: **Polak, James Casimir**
**3320 Highwoods Drive**
**Indianapolis Indiana 46222 (US)**

(74) Representative: **Breakwell, John Neil Bower et al**
**GM Patent Section Vauxhall Motors Limited Luton Office (F6) P.O. Box No. 3 Kimpton Road Luton Bedfordshire LU2 0SY (GB)**

## Description

This invention relates to fluid-operated clutch assemblies for example as disclosed in US-A-3 581 858 and FR-A-2 028 078.

Prior-art fluid-operated clutches have used dump valves to prevent the generation of centrifugal pressure in the rotating clutch when the clutch is disengaged. These arrangements do not provide for counterbalance of the centrifugal pressure when the clutch is engaged.

Other prior-art clutch assemblies have utilised a mechanical flyweight to counterbalance the centrifugally generated pressures found in the rotating clutches. These systems require accurate calibration and location of the flyweight. These systems also use valuable axial space, thereby requiring an increased axial length for the assembly.

The said US-A-3 581 858 discloses a fluid-operated clutch assembly having a centrifugal pressure balance control for a single rotating piston.

FR-A-2 028 078 discloses a clutch mechanism having two clutches and three chambers. Application of each clutch is achieved by filling two clutches with fluid whilst leaving the third empty. Such an arrangement provides no means for counterbalancing.

The present invention is concerned with providing a fluid-operated clutch assembly which provides centrifugal pressure balance on two or more rotating pistons, and which eliminates the need for dump valves.

To this end a clutch assembly in accordance with the present invention is characterised by the features specified in claim 1.

Thus a clutch assembly in accordance with the present invention eliminates the need for dump valves by providing a fluid chamber in which a counterbalancing centrifugal fluid pressure is generated. Such use of a counterbalancing fluid chamber also eliminates the need for mechanical flyweights, and provides for compatibility between the elements generating the centrifugal forces, thereby reducing or eliminating calibration requirements.

A clutch assembly in accordance with the present invention permits the counterbalancing of nested pistons, so that multiple clutch assemblies can be used in a single rotary hub, with the sets of friction plates of the respective clutches being disposed either axially or radially.

The invention thereby makes available an improved clutch assembly which includes two fluid-operated pistons each of which is subject to centrifugally-generated pressure urging clutch engagement, and in which a wall member co-operates with the pistons to form a rotary balancing chamber in which centrifugally generated pressure urges the pistons towards a position of clutch disengagement.

In a preferred embodiment of a clutch assembly in accordance with the present invention, a multiple-clutch assembly includes two fluid-operated pistons slidably supported in a rotary housing, with one of the pistons being supported at least partially by the other piston, each of the pistons has an apply chamber which is subject to centrifugally generated pressure urging engagement of the clutches, a wall member co-operates with the pistons to form a rotary balancing chamber in which centrifugally generated pressure urges the pistons towards a position of disengagement, and the pressure in the apply chamber of one of the pistons urges disengagement of the other of the pistons.

In the drawings :

Figure 1 is a diagrammatic representation of one embodiment of a clutch assembly in accordance with the present invention, and a planetary gear arrangement for use therewith ;

Figure 2 is a diagrammatic representation of another embodiment of a clutch assembly in accordance with the present invention ;

Figure 3 is a fragmentary longitudinal section, with parts in elevation, of a clutch assembly in accordance with the present invention, showing an embodiment similar to that of Figure 1 ; and

Figure 4 is a fragmentary longitudinal section, with parts in elevation, of a clutch assembly in accordance with the present invention, utilising a piston arrangement similar to that shown in Figure 2.

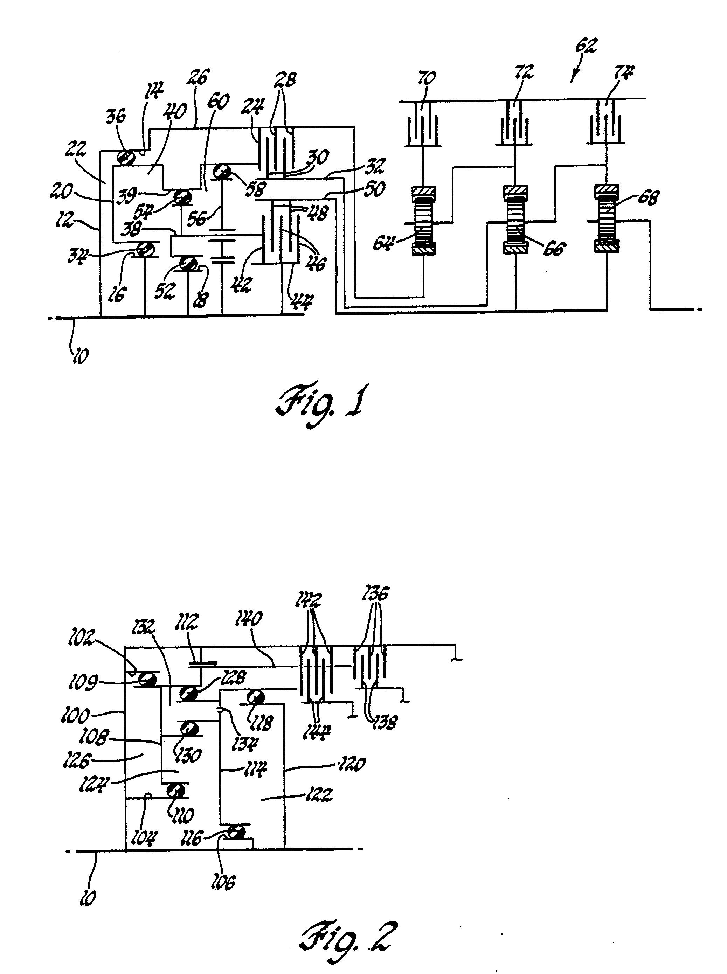

With reference now more particularly to Figure 1 of the drawings, a clutch and planetary gear arrangement is shown wherein an input shaft 10 is drivingly connected to a rotary housing-like hub 12 which has an outer hub surface 14 and inner hub surfaces 16 and 18. The outer hub surface 14 and the inner hub surface 16 co-operate to slidably support a first annular piston 20. The first piston 20 and the hub 12 co-operate to form an apply chamber 22 which may be selectively pressurised to urge the first piston 20 rightwardly into abutment with a friction plate 24 that is drivingly connected to a portion 26 of the hub 12, this portion 26 also having friction plates 28 drivingly connected thereto. The plates 28 and 24 alternate with friction plates 30 which are drivingly connected to a hub 32. The first piston 20 and the hub 12 co-operate with a pair of annular seals 34 and 36 which prevent fluid leakage from the apply chamber 22.

A second piston 38 is slidably disposed between the inner hub surface 18 and the inner surface 39 of the piston 20. The second piston 38, the first piston 20 and the hub 12 co-operate to form an apply chamber 40 into which fluid pressure is admitted to cause axial movement of the second piston 38. The second piston 38 is urged by fluid pressure into abutment with a friction disc 42 which is drivingly connected by way of a drum 44 to the hub 12 or the input shaft 10. The drum 44 also has drivingly connected thereto a plurality of friction discs 46, and the friction discs 42 and 46 alternate with a plurality of friction discs 48 which are drivingly connected to a hub 50. The second piston 38 is sealingly slidably engaged by a pair of annular seals 52 and 54 which prevent leakage of fluid from the apply chamber 40.

An axially stationary wall 56 is rotatably integral with the hub 12 or the input shaft 10, and therefore with the first and second clutch pistons 20 and 38. The wall 56 is sealingly slidably connected to the first piston 20 by an annular seal member 58. Low-pressure hydraulic fluid, such as lube (lubricating) fluid, is admitted to a balance chamber 60 formed between the second piston 38 and the wall 56. This balance chamber 60 is also subject to rotation. The fluid in the balance chamber 60 will thus have a centrifugal pressure generated therein, and this centrifugal pressure will operate to urge the second piston 38 leftwardly. However, this leftward urging of the second piston 38 will be balanced by the centrifugal pressure generated within the fluid in the apply chamber 40. The centrifugal pressure of the fluid in the apply chamber 40 will also act on the first piston 20 to urge leftward movement of the first piston 20. This leftward urging of the first piston 20 will be counterbalanced by centrifugal pressure generated in the fluid in the apply chamber 22. Thus the centrifugal pressures are balanced, and the pistons 38 and 20 will not be subject to axial forces resulting from the centrifugal pressures.

The portion 26, the hub 32 and the hub 50 are connected to components of a planetary gearing arrangement generally designated 62. This planetary gearing arrangement 62 includes three simple planetary sets 64, 66 and 68 which are operatively connected to respective selectively operable brake members 70, 72 and 74 that co-operate with the engagement of the above-described friction clutches to provide six forward-speed ratios and one reverse-speed ratio. This planetary gear arrangement is described in US-A-4 070 927.

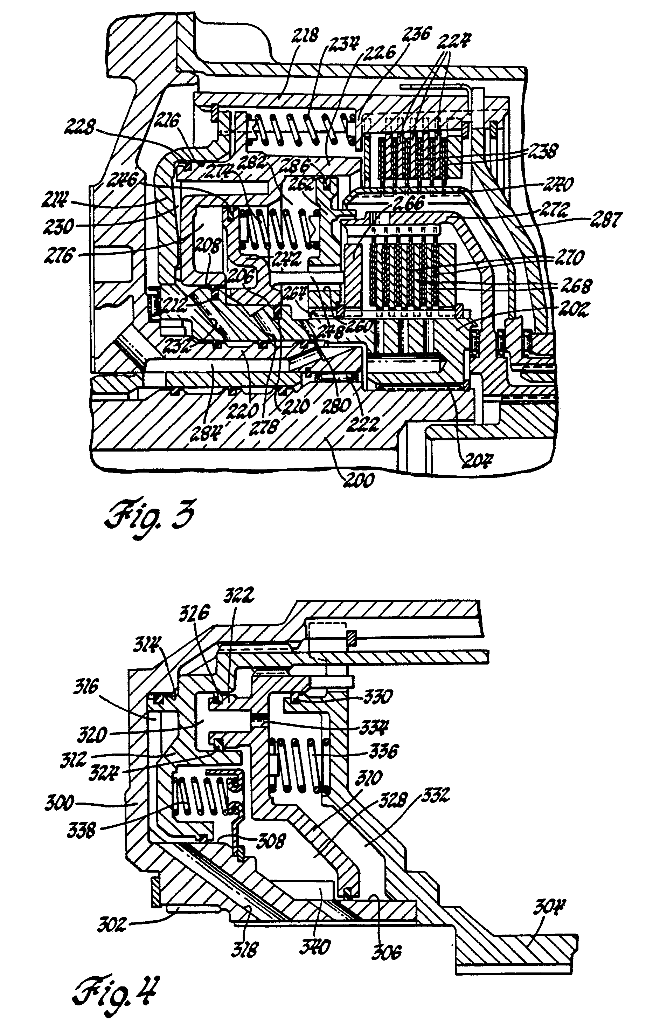

The embodiment of a clutch assembly in accordance with the present invention which is shown in Figure 2 is similar to that described above in relation to Figure 1. However, the Figure 2 arrangement provides for relatively axially disposed friction discs, whereas Figure 1 depicts relatively radially aligned friction discs or packs for the separate clutches.

The multiple-clutch assembly shown in Figure 2 includes an input shaft 10 to which is rotatably secured a hub 100 having an outer hub surface 102 and a pair of inner hub surfaces 104 and 106. A first clutch piston 108 is slidably and sealingly connected to the hub 100 by means of a pair of annular seals 109 and 110 disposed at the hub surfaces 102 and 104 respectively. The first clutch piston 108 is rotatably drivingly connected to the hub 100 at a spline member 112.

A second clutch piston 114 is slidably disposed on the inner hub surface 106, and is sealingly engaged by an annular seal member 116. The second piston 114 is also sealingly engaged by a seal member 118 that is disposed on a wall 120 which is axially stationary but rotatably integral with the input shaft 10 and the hub 100. The wall 120 co-operates with the second clutch piston 114 to form a fluid balance chamber 122 which is supplied with low-pressure fluid such as that found in a lubrication system of a transmission.

The second clutch piston 114 and the first clutch piston 108 co-operate to form an apply chamber 124 which is supplied with fluid that may be selectively pressurised to cause axial movement of the second clutch piston 114.

The first clutch piston 108 co-operates with the outer and inner surfaces 102 and 104 and the end wall of the hub 100 to form an apply chamber 126 which may be selectively pressurised to cause axial movement of the first clutch piston 108. The first clutch piston 108 is also slidably sealingly connected by means of a pair of annular seals 128 and 130 to the second clutch piston 114. This arrangement forms a pressure-balance chamber 132 which is in fluid communication by way of a passage 134 with the fluid balance chamber 122.

The first clutch piston 108 is operable to provide interengagement of a plurality of friction discs 136 and a plurality of friction discs 138. The first clutch piston 108 has a plurality of axial extensions 140 which are operable to abut one of the friction discs 136. The second clutch piston 114 is axially slidable to cause frictional interengagement of a plurality of friction discs 142 and a plurality of friction discs 144. The friction discs 142 rotate in unison with the hub 100, as do the frictions discs 136, the second clutch piston 114 and the first clutch piston 108. The friction discs 142 have circumferentially extending openings which permit the axial extensions 140 of the first clutch piston 108 to pass through, for permitting abutment with the friction discs 136. Such a construction of friction discs and pistons has been utilised in the past, and will be familiar to those normally working with clutches and the design thereof.

The clutch mechanism shown in Figure 2 can be utilised with the planetary gearing arrangement shown in Figure 1, or with many other well-known planetary gear arrangements.

Figure 3 is a fragmentary longitudinal sectional view showing a portion of a multiple clutch assembly that is similar to the clutch assembly shown in Figure 1. The clutch assembly shown in Figure 3 includes an input shaft 200 to which a hub 202 is drivingly connected by way of a spline connection 204. The hub 202 has a pair of inner hub surfaces 206 and 208 in which are disposed respective annular seal members 210 and 212. The hub 202 also includes an end wall 214 which has formed therein an outer annular hub surface 216. The hub 202 further includes an outer annular shell 218 which is drivingly connected by means of a spline connection to the end wall 214. The hub 202 is rotatably supported on a stationary member 220 which also rotatably supports the input shaft 200 by way of a bearing 222.

The outer shell 218 has a plurality of clutch plates 224 splined thereto. The leftmost of these plates 224 is in close proximity to a first annular apply piston 226 which is slidably supported on the seal 212. The first piston 226 has disposed thereon a seal 228 which slidably sealingly engages the outer annular hub surface 216. The first piston 226 co-operates with the end wall 214 to form an apply chamber 230 which is in fluid communication with a fluid passage 232 through which fluid may be admitted to the apply chamber 230. By selective pressurisation of such fluid, the first piston 226 can be moved axially into abutment with the clutch plates 224.

A plurality of spring members, such as 234, are disposed between the piston 226 and a wall 236 formed on the outer shell 218. These spring members urge the first piston 226 away from the plate 224 : they are commonly referred to as piston return springs.

A plurality of friction discs (plates) 238 are disposed intermediate respective pairs of the clutch plates 224, thereby forming what is commonly termed a disc pack (clutch pack). The friction discs 238 are splined at their inner diameter to an output hub 240. The first apply piston 226, the clutch plates 224, the friction discs 238 and the hubs 240 and 202 provide what is commonly termed a multi-plate friction clutch.

The seal member 210 and the inner hub surface 206 slidably support a second annular apply piston 242. The second annular piston 242 has disposed thereon an annular seal 246 which sealingly slidably engages the first apply piston 226. The second annular piston 242 has a plurality of axially extending fingers 248 which extend through respective openings 260 formed in a wall member 262 that is drivingly connected to the hub 202 by way of a spline 264. The fingers 248 are adapted to abut a pressure plate 266 which is drivingly connected to the hub 202. A plurality of friction plates (discs) 268 are also drivingly connected to the hub 202, and are spaced from each other by a plurality of friction plates (discs) 270 that are drivingly connected to a clutch output hub 272.

A plurality of return springs 274 are disposed between the second annular piston 242 and the wall member 262, and these springs urge the second annular piston 242 out of abutment with the pressure plate 266. The second annular piston 242, the plates 266, 268 and 270 and the hubs 272 and 202 co-operate to form a multi-plate friction clutch. The second annular piston 242 co-operates with the first apply piston 226 and the seals 210 and 246 to form a clutch apply chamber 276 which is in fluid communication with a passage 278. Fluid can thus be admitted to the apply chamber 276, and, by selective pressurisation thereof, the second annular piston 242 can be urged rightwardly to cause frictional interengagement of the plates 268 and 270.

A fluid passage 280 is disposed in fluid communication between a balance chamber 282 and a lube (lubrication) supply chamber 284. The balance chamber 282 is formed between the wall member 262 and the first and second pistons 226 and 242. An annular seal 286 prevents fluid leakage between the outer surface of the wall member 262 and the first apply piston 226. As previously mentioned, the wall member 262 is splined to the hub 202, and is therefore rotatably integral therewith.

Whenever the hub 202 is rotated by the input shaft 200, the chambers 230, 276 and 282 will have centrifugally generated fluid pressures therein. The pressure in the chamber 230 urges the first apply piston 226 rightwardly towards a position of clutch engagement. This rightward urging is counterbalanced by the fluid pressure in the chamber 276 and the fluid pressure in the balance chamber 282 radially outwardly of the seal 246. The fluid pressure in the apply chamber 276 urges the second annular piston 242 rightwardly towards a position of clutch engagement. This rightward urging is counterbalanced by the fluid pressure in the balance chamber 282 radially outwardly of the openings 260.

By control of the diameter at which the seal 286 engages and abuts the first apply piston 226, and the diameter at which the seal 228 abuts the annular hub surface 216, the first apply piston 226 can be 100% pressure-balanced, or it can be balanced at a value other than 100%. In some instances it may be desirable to permit the clutch to engage with increasing force as the speed of rotation increases. However, the percentage of the piston force balanced should be sufficiently great to prevent clutch drift-on when clutch disengagement is desired.

The second annular piston 242 is less than 100% pressure-balanced. 100% pressure balance can be accommodated, if desired, by placing seals between the openings 260 and the fingers 248, but it has been found to be generally satisfactory to provide something less than 100% of centrifugal pressure-balancing for the second annular piston 242. The return springs 234 and 274 can be utilised to limit drift-on of the respective pistons 226 and 242 at high rotary speeds.

The shell 218 is drivingly connected to a hub 287, which may in turn be connected to a transmission component similar to that shown in Figure 1. The clutch output hubs 240 and 272 are also connected to transmission components similar to those shown in Figure 1. The shell 218 does not have to be a positive input drive component to a planetary gearing arrangement, in which case only the clutches would provide input drives ; further, a planetary arrangement different from that shown in Figure 1 could be utilised.

In Figure 4 a clutch assembly is shown that has a piston arrangement which is similar to the arrangement described in relation to Figure 2. In the Figure 4 arrangement, an input hub 300 is drivingly connected to an input shaft, not shown, by way of a spline 302, and a wall member 304 is also drivingly connected to the input shaft. The input hub 300 has a pair of inner hub surfaces 306 and 308 on which are slidably disposed a pair of pistons 310 and 312 constituting second and first pistons respectively. The first piston 312 also slidably sealingly engages a hub surface 314. A clutch apply chamber 316 is formed between the first piston 312 and the hub 300, and may be selectively pressurised by way of a fluid passage 318 to urge rightward movement of the first piston 312.

The first piston 312 has an annular chamber 320 formed therein in which an annular extension 322 formed on the second piston 310 is slidably disposed. The annular extension 322 has seals 324 and 326 which sealingly slidably engage the annular surfaces of the annular chamber 320. The inner seal 324 delimits the outermost active diameter of the second piston 310 such that a clutch apply chamber 328 is formed between the second piston 310 and the first piston 312.

The wall 304 has disposed thereon an annular seal 330 which sealingly slidably engages the second piston 310 and co-operates therewith to form a balance chamber 332. The balance chamber 332 is in fluid communication via passage 334 with the chamber 320. The pistons 310 and 312 have respective return springs 336 and 338 associated therewith which operate to urge the respective pistons in a leftward direction. A stop surface 340 is formed on the hub 304 to limit the leftward movement of the second piston 310.

The remaining components of the friction clutches, that is, the friction discs and the output hubs, have been omitted for clarity. The inclusion of these components should not be necessary for an understanding of the present invention.

The fluid present in the chambers 316, 328, 320 and 332 will be subject to centrifugal pressure generated by the rotation of the hub 300 and the wall 304. The pressure in the chamber 316 urges the first piston 312 for rightward movement, which is counterbalanced by the centrifugal pressure in the chamber 320 and the chamber 328. The pressure in the chamber 328 urges the second piston 310 for rightward movement, which is counterbalanced by the pressure in the balance chamber 332 radially inwardly of the seal 324. The pressure in the chamber 320 urges the second piston 310 for rightward movement, which is counterbalanced by the pressure in the balance chamber 332 radially outwardly of the seal 324 and radially inwardly of the seal 330. The pistons 310 and 312 as shown in Figure 4 are 100% centrifugally pressure-balanced. This pressure balance can be adjusted from the 100% value by controlling the diameters at which the seals 326 and 330 are efective, if it is found to be desirable to permit increasing clutch engagement with increasing clutch speed.

The nested-piston arrangement shown in Figure 4 can be utilised to control a planetary gearing arrangement such as that shown in Figure 1, or it can be combined with many of the other well-known planetary gearing arrangements to provide a multiple speed-ratio transmission.

## Claims

1. A clutch assembly in an engine-driven power transmission having a rotary input member (10), in which the clutch assembly comprises input hub means (12) drivingly connected to the rotary input member, the input hub means (12) including an outer hub portion (14) and an inner hub portion (16, 18) ; a first clutch piston (20) slidably disposed between the inner hub portion (16, 18) and the outer hub portion (14) ; a second clutch piston (38) slidably disposed between the first piston (20) and one (16, 18) of the hub portions (14 and 16, 18) and co-operating with the first piston (20) to define a first apply chamber (40) ; wherein the first piston (20) co-operates with the input hub means (12) to define a second apply chamber (22) ; a wall member (56) is drivingly connected to the input hub means (12) and sealingly engages the first piston (20) and co-operates with both the first piston (20) and the second piston (38) to form a balance chamber (60) ; means is provided for individually admitting fluid to the first apply chamber (40), to the second apply chamber (22), and to the balance chamber (60), the second and first apply chambers (22 and 40) being individually selectively pressurisable to urge the first piston (20) and the second piston (38) respectively in an axial direction relative to the input hub means (12), the fluid pressures in the balance chamber (60) and in the second apply chamber (22) being subject to a pressure that is proportional to the speed of the input member (10) and both act on the second piston (38) to counterbalance fluid pressure in the first apply chamber (40), and the fluid pressure in the balance chamber (60) and in the first apply chamber (40) being subject to a pressure that is proportional to the speed of the input member (10) and both act on the first piston (20) to counterbalance fluid pressure in the second apply chamber (22), the axial movement of either the first piston (20) or the second piston (38) being unaffected by the compensatory rotary speed-created pressure.

2. A clutch assembly according to claim 1, wherein the fluid pressures in the balance chamber and in the second apply chamber reacts to a first balance force on the second piston to provide the counterbalancing of fluid pressure in the first apply chamber; and the fluid pressures in the balance chamber and in the first apply chamber both act to impose a second balance force on the first piston to provide the counterbalancing of pressure in the fluid in the second apply chamber ; one of the balance forces being less than 100% of the force required to counterbalance the speed-proportional pressure in the respective apply chamber.

3. A clutch assembly according to claim 1 or claim 2, wherein the second piston (38) is slidably disposed between the first piston (20) and the inner hub portion (16, 18).

## Ansprüche

1. Kupplungsanordnung in einem maschinengetriebenen Leistungsgetriebe mit einem sich drehenden Eingangsglied (10), wobei die Kupplungsanordnung ein Eingangsnabenmittel (12) umfaßt, das antreibend dem sich drehenden Eingangsglied verbunden ist, das Eingangsnabenmittel (12) einen äußeren Nabenabschnitt (14) und einen inneren Nabenabschnitt (16, 18) enthält, ein erster Kupplungskolben (20) gleitbar zwischen dem inneren Nabenabschnitt (16, 18) und dem äußeren Nabenabschnitt (14) angeordnet ist ; ein zweiter Kupplungskolben (38) gleitbar zwischen dem ersten Kolben (20) und einem (16, 18) der Nabenabschnitte (14 und 16, 18) angeordnet ist und mit dem ersten Kolben (20) zur Bestimmung einer ersten Beaufschlagungskammer (40) zusammenwirkt ; wobei der erste Kolben (20) mit dem Eingangsnabenmittel (12) zur Bestimmung einer zweiten Beaufschlagungskammer (22) zusammenwirkt ; ein Wandelement (56) antreibend mit dem Eingangsnabenmittel (12) verbunden ist, dichtend mit dem ersten Kolben (20) in Eingriff steht und sowohl mit dem ersten Kolben (20) wie auch mit dem zweiten Kolben zur Bildung einer Ausgleichskammer (60) zusammenwirkt ; wobei Mittel vorgesehen ist, um Fluid einzeln zu der ersten Beaufschlagungskammer (40), zu der zweiten Beaufschlagungskammer (22) und zu der Ausgleichskammer (60) zuzulassen, die erste und die zweite Beaufschlagungskammer (22 und 40) wahlweise einzeln unter Druck setzbar sind, um den ersten Kolben (20) bzw. den zweiten Kolben (38) jeweils in einer Axialrichtung relativ zum Eingangsnabenmittel (12) zu drängen, die Fluiddrucke in der Ausgleichskammer (60) und in der zweiten Beaufschlagungskammer (22) einer Druckkraft unterworfen sind, die proportional der Drehzahl des Eingangsgliedes (10) ist, und beide auf den zweiten Kolben (38) einwirken, um Fluiddruck in der ersten Beaufschlagungskammer in Gegenwirkung auszugleichen, und die Fluiddrucke in der Ausgleichskammer (60) und in der ersten Beaufschlagungskammer (40) einem Druck unterworfen sind, der proportional zur Drehzahl des Eingangsgliedes (10) ist, und beide auf den ersten Kolben (20) einwirken, um Fluiddruck in der zweiten Beaufschlagungskammer (22) in Gegenwirkung auszugleichen, und die Axialbewegung des ersten (20) oder des zweiten (38) Kolbens durch den durch Drehzahl erzeugten Ausgleichs-Druck unbeeinflußt ist.

2. Kupplungsanordnung nach Anspruch 1, bei der die Fluiddrucke in der Ausgleichskammer und in der zweiten Beaufschlagungskammer auf eine auf den zweiten Kolben einwirkende erste Ausgleichskraft reagieren, um den Gegenwirkungsausgleich für Fluiddruck in der ersten Beaufschlagungskammer zu schaffen ; und die Fluiddrucke in der Ausgleichskammer und in der ersten Beaufschlagungskammer beide wirken, um eine zweite Ausgleichskraft auf den ersten Kolben auszuüben, um die Gegenausgleichswirkung für Druckwerte in dem Fluid in der zweiten Beaufschlagungskammer zu schaffen ; wobei eine der Ausgleichskräfte weniger als 100% der zum Gegenausgleich für den drehzahl-proportionalen Druck in der jeweiligen Beaufschlagungskammer erforderlichen Kraft ist.

3. Kupplungsanordnung nach Anspruch 1 oder 2, bei der der zweite Kolben (38) gleitbar zwischen dem ersten Kolben (20) und dem inneren Nabenabschnitt (16, 18) angeordnet ist.

## Revendications

1. Embrayage destiné à une transmission entraînée par un moteur, ayant un organe rotatif d'entrée (10), dans lequel l'embrayage comprend un moyeu d'entrée (12) raccordé à l'organe rotatif d'entrée qui l'entraîne, le moyeu d'entrée (12) comprenant une partie externe (14) et une partie interne (16, 18) de moyeu, un premier piston (20) d'embrayage disposé afin qu'il coulisse entre la partie interne (16, 18) et la partie externe (14) de moyeu, un second piston (38) d'embrayage disposé afin qu'il puisse coulisser entre le premier piston (20) et l'une (16, 18) des parties de moyeu (14 et 16, 18) et coopérant avec le premier piston (20) à la délimitation d'une première chambre d'application (40), dans lequel le premier piston (20) coopère avec le moyeu d'entrée (12) à la délimitation d'une seconde chambre d'application (22), une paroi (56) est raccordée au moyeu d'entrée (12) qui l'entraîne et coopère de façon étanche avec le premier piston (20) et coopère à la fois avec le premier piston (20) et le second piston (38) à la formation d'une chambre d'équilibrage (60), un dispositif est destiné à admettre individuellement du fluide dans la première chambre d'application (40), dans la seconde chambre d'application (22) et dans la chambre d'équilibrage (60), la seconde et la première chambre d'application (22 et 40) pouvant être mises sélectivement et individuellement sous pression de manière que le premier piston (20) et le second piston (38) soient repoussés en direction axiale par rapport au moyeu d'entrée (12), les pressions du fluide dans la chambre d'équilibrage (60) et dans la seconde chambre d'application (22) dépendant d'une pression qui est proportionnelle à la vitesse de l'organe d'entrée (10) et agissant toutes deux sur le second piston (38) afin que la pression régnant dans la première chambre d'application soit compensée et la pression du fluide dans la chambre d'équilibrage (60) et dans la première chambre d'application (40) dépendant d'une pression qui est proportionnelle à la vitesse de l'organe d'entrée (10) et agissant toutes deux sur le premier piston (20) afin que la pression du fluide soit compensée dans la seconde chambre d'application (22), le déplacement axial du premier piston (20) ou du second piston (38) étant assuré par la pression de compensation créée par la vitesse de rotation.

2. Embrayage selon la revendication 1, dans lequel les pressions du fluide dans la chambre d'équilibrage et dans la seconde chambre d'application réagissent à une première force d'équilibrage réagissant sur le second piston afin que la pression du fluide dans la première chambre d'application soit compensée, et la pression du fluide dans la chambre d'équilibrage et dans la première chambre d'application agissent toutes deux pour l'application d'une seconde force d'équilibrage au premier piston et pour la compensation de la pression du fluide dans la seconde chambre d'application, l'une des forces d'équilibrage étant inférieure à 100% de la force nécessaire à l'équilibrage de la pression proportionnelle à la vitesse créée dans la chambre respective d'application.

3. Embrayage selon la revendication 1 ou 2, dans lequel le second piston (38) est disposé afin qu'il puisse coulisser entre le premier piston (20) et la partie interne de moyeu (16, 18).

Fig. 1

Fig. 2

Fig. 3

Fig. 4